**Europäisches Patentamt**

**European Patent Office**

**Office européen des brevets**

(11) Veröffentlichungsnummer: **0 230 077**

**A2**

## (12) EUROPÄISCHE PATENTANMELDUNG

(21) Anmeldenummer: **86202290.2**

(22) Anmeldetag: **16.12.86**

(51) Int. Cl.⁴: **H04N 1/40**

(30) Priorität: **20.12.85 DE 3545156**

(43) Veröffentlichungstag der Anmeldung:
**29.07.87 Patentblatt 87/31**

(84) Benannte Vertragsstaaten:
**DE FR GB**

(71) Anmelder: **Philips Patentverwaltung GmbH**
**Billstrasse 80**
**D-2000 Hamburg 28(DE)**
**DE**
Anmelder: **N.V. Philips' Gloeilampenfabrieken**
**Groenewoudseweg 1**
**NL-5621 BA Eindhoven(NL)**
**FR GB**

(72) Erfinder: **Ehlers, Bernd**
**Falkenweg 5**
**D-2200 Elmshorn(DE)**
Erfinder: **Renelt, Gerhard, Dr.**
**Wiebischenkamp 41**
**D-2000 Hamburg 54(DE)**
Erfinder: **Rothgordt, Ulf, Dr.**
**Bargkoppel 33**
**D-2000 Norderstedt(DE)**

(74) Vertreter: **Poddig, Dieter et al**
**Philips Patentverwaltung GmbH Billstrasse**
**80 Postfach 10 51 49**
**D-2000 Hamburg 28(DE)**

(54) Verfahren und Schaltungsanordnung zur Erzeugung von Pseudo-Halbtonbildern.

㉗ Zur Erzeugung von Pseudo-Halbtonbildern wird das zu druckende Bild abgetastet und die Signale von Bildpunkten aneinandergrenzender Felder mit einem Satz von Schwellwerten verglichen. Erfindungsgemäß wird der Vergleich der Bildpunkte mit den Schwellwerten derart vorgenommen, daß die Felder von Bildpunkten, die jeweils mit einem Satz von Schwellwerten verglichen werden, in Zeilen-und Spaltenrichtung gegeneinander verschoben sind, so daß in jeder Bildzeile und jeder Bildspalte alle Schwellwerte berücksichtigt sind. Dadurch werden beim Auslassen bzw. Verdoppeln von Bildzeilen und -spalten zur Auflösungsumwandlung Pseudo-Halbtonbilder erhalten, die Bildpunkte aus dem Vergleich von allen Schwellwerten enthalten, so daß keine Bildverfälschungen entstehen.

Fig. 2

"Verfahren und Schaltungsanordnung zur Erzeugung von Pseudo-Halbtonbildern"

Die Erfindung betrifft ein Verfahren zum Erzeugen eines Pseudo-Halbtonbildes aus Bildpunkten, deren binäre Bildpunktwerte gemäß dem Ordered Dither-Verfahren aus der Abtastung einer Vorlage und Vergleich des Abtastsignals der Bildpunkte in jeweils einem Feld aus einer vorgegebenen Anzahl in einer bestimmten Lage zueinander benachbarter Bildpunkte mit einem Satz von zumindest teilweise verschiedenen Schwellwerten gewonnen sind, wobei jedem Bildpunkt des Feldes ein eigener Schwellwert aus dem Satz von Schwellwerten zugeordnet ist und benachbarte Felder ohne Lücke aneinander grenzen, sowie eine Schaltungsanordnung zur Durchführung des Verfahrens.

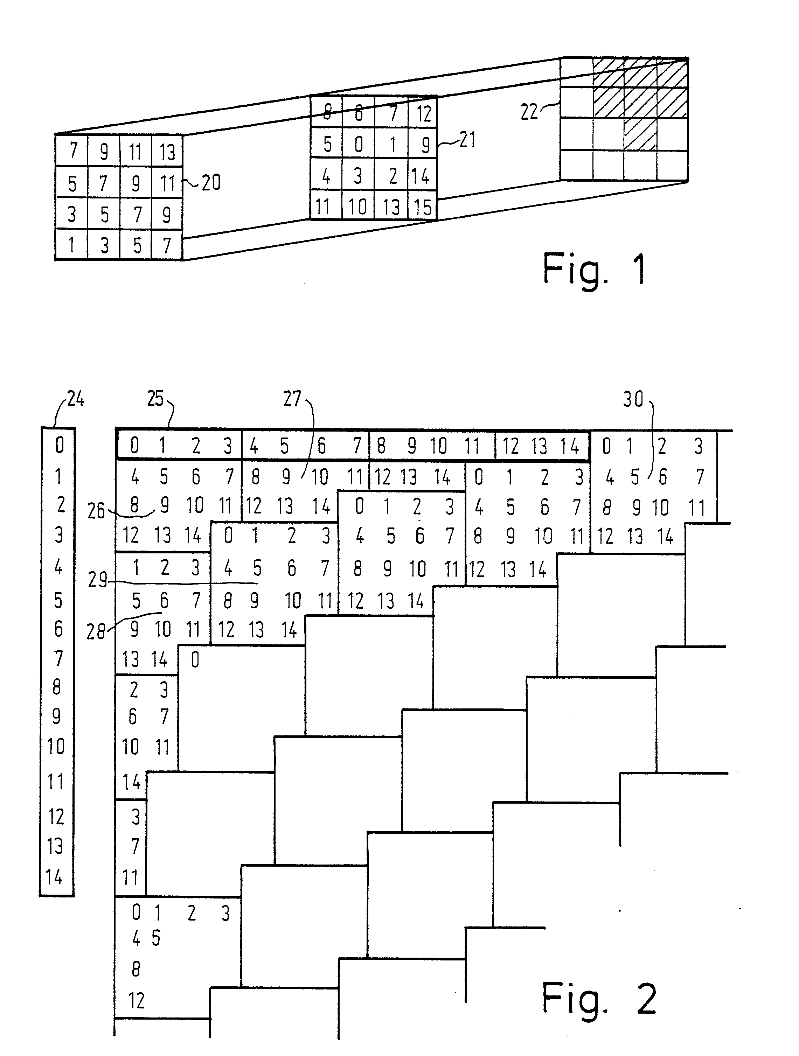

Das Ordered Dither-Verfahren ist beispielsweise bekannt aus Bell System Techn. Journal, 48, 1969, S. 2555-2582 und wird verwendet, um mit Hilfe von Matrixdruckern oder Bildschirmgeräten, die nur Bildpunkte gleicher Größe und Intensität darstellen können, Pseudo-Halbtonbilder aufzuzeichnen, die einen guten Halbtoneindruck vermitteln. Dieses bekannte Verfahren soll anhand der Fig. 1 näher erläutert werden. Darin stellt der Bildausschnitt 20 einen Teil aus einem abgetasteten Halbtonbild in der Größe von vier × vier Bildpunkten dar, wobei in diesen Bildpunkten die darin eingetragenen Zahlen den Helligkeitswert oder Grauwert des betreffenden Bildpunktes angeben. Ein hoher Wert bedeutet dabei ein dunkler Bildpunkt, so daß zu erkennen ist, daß in dem Bildausschnitt 20 die Bildpunkte von links unten diagonal nach rechts oben dunkler werden.

Um daraus ein binäres Pseudo-Halbtonbild zu erzeugen, wird der Bildausschnitt 20 von Bildpunkten mit einer Matrix 21 von Schwellwerten verglichen. Wenn der Helligkeitswert oder Grauton des Bildpunktes größer als der an der gleichen Stelle der Matrix 21 angegebene Schwellwert ist, wird ein Punkt aufgezeichnet. Die sich so ergebenden binären Bildpunkte sind in dem Bildausschnitt 22 dargestellt. Tatsächlich sind die Bildausschnitte 20 bzw. 22 so klein, daß beim Pseudo-Halbtonbild die einzelnen Bildpunkte bei Betrachtung im normalen Abstand verschwimmen und ein Grautoneindruck entsteht, der von der Anzahl der schwarzen Bildpunkte in jedem Bildausschnitt 22 abhängt.

Die mit dem beschriebenen Ordered Dither-Verfahren gewonnenen binären Pseudo-Halbtonbilder können nun übertragen bzw. gespeichert werden. Die Wiedergabe erfolgt mit Geräten, die dieselbe Auflösung, d.h. dieselbe Anzahl der Punkte pro Millimeter aufweisen, wenn verlangt wird, daß die Bildgröße erhalten bleibt.

Wenn man ein solches übertragenes bzw. gespeichertes Bild mit einem Gerät anderer Auflösung, d.h. anderer Anzahl Punkte pro Millimeter, bei gleicher Bildgröße wiedergeben will, müssen bei größerer Auflösung Bildpunkte vervielfacht oder bei geringerer Auflösung Bildpunkte ausgelassen werden. Wenn dies in der Form geschieht, daß in regelmäßigen Abständen liegende Bildzeilen und Bildspalten unterdrückt oder verdoppelt werden, abhängig von einer geforderten Erhöhung oder Verringerung der Auflösung, wird zumindest bei bestimmten Verhältnissen der Auflösungsveränderung und bestimmten Größen bzw. Anordnungen der Schwellwerte in der Matrix 21 der optische Eindruck verfälscht, denn wenn insbesondere bei Auslassung von Bildzeilen und Spalten immer solche betroffen sind, die zu denselben Zeilen und Spalten der Matrix 21 gehören, gehen die entsprechenden Halbtöne verloren. Außerdem kann die Auflösungsveränderung durch die Überlagerung von verschiedenen Rastern zu groben Strukturen führen.

Aufgabe der Erfindung ist es daher, ein Verfahren der eingangs genannten Art anzugeben, mit dem Pseudo-Halbtonbilder erzeugt werden, bei denen zur Auflösungsumwandlung Zeilen und Spalten des pseudo-Halbtonbildes ausgelassen oder verdoppelt werden können, ohne daß sich die mittlere Verteilung der Halbtöne ändert und sich das dabei entstehende neue Pseudo-Halbtonbild im optischen Eindruck wesentlich von dem zunächst vorhandenen Pseudo-Halbtonbild unterscheidet.

Diese Aufgabe wird erfindungsgemäß dadurch gelöst, daß die Felder aus Bildpunkten des abgetasteten Bildes in Bildzeilen-und Bildspaltenrichtung gegeneinander derart versetzt sind, daß in jeder Bildzeile und Bildspalte im wesentlichen die gleiche Anzahl der verschiedenen Zeilen und Spalten der Felder vorhanden ist.

Der Erfindung liegt die Erkenntnis zugrunde, daß die Felder aus Bildpunkten bzw. die Anordnung der Schwellwerte in dem Satz von Schwellwerten nicht unbedingt rechteckig bzw. quadratisch sein muß bzw. daß die Anzahl verschiedener Schwellwerte in einem gewissen Rahmen frei wählbar ist, sofern die Amplitude des Abtastsignals insbesondere dem maximalen Schwellwert angepaßt ist. Insbesondere wenn in der Praxis die Abtastsignale als digitale Werte in Form von Dualzahlen mit n Bits vorliegen, werden $2^n-1$ Schwellwerte oder ein Vielfaches davon benötigt, denn der höchste darstellbare Schwellwert kann von dem Abtastsignal nicht überschritten werden, so daß beim Vergleich immer derselbe binäre Wert erscheint, unabhängig von dem Abtastsignal, so daß dieser Wert keine Information in bezug auf das Bild darstellt. Dies bedeutet aber, daß quadratische oder auch viele rechteckige Felder nicht ideal angepaßt sind. Es ist zwar bekannt, für quadratische Raster Felder zu verwenden, die nicht quadratische Formen aufweisen und äquidistant zu den Nachbarfeldern angeordnet sind, wie aus der Dissertation vom 28.05.1984 von Klaus Koch "Untersuchungen der Wahrnehmbarkeit von Rasterungen bei digitaler Wiedergabe von Halbtonbildern", TU München, hervorgeht, sowie aus der DE-AS 29 43 018 die Anwendung von Feldern in einem hexagonalen Raster, jedoch erfordert dies eine versetzte Anordnung der Aufzeichnungselemente.

Es sind verschiedene Formen von Feldern möglich, die die Forderungen erfüllen, daß in jeder Bildzeile im wesentliche die gleiche Anzahl verschiedener Zeilen der Felder vorhanden ist und ebenso für die Spalten. Insbesondere können Felder verwendet werden, die aus einem Quadrat abgeleitet sind, bei dem an einer Ecke einige Punkte fehlen, sofern diese Felder lückenlos aneinandergereiht werden können, so daß jeder Bildpunkt des Bildes in einem Feld liegt. Eine besonders einfache Form ist nach einer Ausgestaltung des erfindungsgemäßen Verfahrens dadurch gekennzeichnet, daß benachbarte Felder um jeweils eine Zeile bzw. eine Spalte gegeneinander verschoben sind. Ein derartiges Feld hat die Form eines Rechteckes bzw. eines Quadrates, bei dem in einer Ecke ein Bildpunkt fehlt. Dabei sind in dem Satz von Schwellwerten nur unterschiedliche Schwellwerte vorhanden, wobei diese Anzahl um 1 kleiner ist als im Falle eines vollständigen Quadrates.

Eine Anordnung zur Durchführung des erfindungsgemäßen Verfahrens mit einem Vergleicher, dem die Abtastsignale der aufeinanderfolgenden Bildpunkte und die Schwellwertsignale zugeführt werden, die in einem von einer Adressiervorrichtung adressierten Schwellwertspeicher Schwellwertspeicher gespeichert sind, wobei der Vergleicher ein binäres Ausgangssignal mit dem einen Wert liefert, wenn der Wert des Abtastsignals größer ist als der gleichzeitig zugeführte Schwellwert, ist dadurch gekennzeichnet, daß die Adressiervorrichtung einen Zähler enthält, der einen mit dem Zuführen der Abtastsignale synchronen Zähltakt erhält und der nacheinander alle Schwellwerte in dem Schwellwertspeicher adressiert und ausliest und der zu Beginn jeder neuen Bildzeile den Schwellwertspeicher an einer neuen Adresse adressiert. Beim Stand der Technik sind die Felder in Zeilen-und Spaltenrichtung nebeneinander bzw. untereinander angeordnet, so daß eine bestimmte Bildzeile in allen Feldern die gleiche Zeile innerhalb des Feldes umfaßt, und ebenso für die Spalten, so daß innerhalb einer Zeile jeweils nur die Schwellwerte einer Zeile ausgelesen werden. Durch den gegenseitigen Versatz der Felder ergibt sich jedoch, daß innerhalb einer Bildzeile nacheinander alle Schwellwerte ausgelesen werden, wie später näher erläutert wird.

Für den Beginn der Adressierung des Schwellwertspeichers mit jeweils einer neuen Adresse am Beginn jeder neuen Bildzeile ist es zweckmäßig, daß ein mit jeder neuen Zeile auftretender Zeilentakt den Zähler auf eine Anfangsadresse setzt, die aus einem Anfangsadressenspeicher ausgelesen wird, der von einem mit dem Zeilentakt weitergeschalteten Zeilenzähler adressiert ist. Durch die Verwendung des Anfangsadressenspeichers kann jeder gegenseitige Versatz von Feldern berücksichtigt werden.

Für Felder, die aus einem Quadrat mit der Seitenlänge einer ganzen Potenz von 2 entstanden sind, ist es besonders zweckmäßig, daß der Anfangsadressenspeicher der Zeilenzähler selbst ist, dessen Zählerausgänge mit vertauschter Wertigkeit die jeweilige Anfangsadresse für den Zähler liefert. Auf diese Weise kann ein gesonderter Anfangsadressenspeicher gespart werden.

Ausführungsbeispiele der Erfindung werden nachstehend anhand der Zeichnung näher erläutert. Es zeigen:

Fig 2 die Anordnung einer Anzahl Felder, die gegeneinander um jeweils eine Zeile und eine Spalte verschoben sind,

Fig. 3 das Blockschaltbild einer Anordnung zur Erzeugung der Bildpunktwerte des Pseudo-Halbtonbildes,

Fig. 4 eine vereinfachte Anordnung zur Erzeugung der Bildpunktwerte.

In Fig. 2 werden Felder mit fünfzehn Bildpunkten für einen Satz von fünfzehn verschiedenen Schwellwerten verwendet, die beispielsweise eine Anordnung wie in der Matrix 21 in Fig. 1 haben können, wobei lediglich der höchste Schwellwert rechts unten weggelassen ist. Dabei wird davon ausgegangen, daß sechzehn verschiedene Werte des Abtastsignals unterschieden werden können, die sich ergeben, wenn das Abtastsignal digitalisiert und in Form von Dualzahlen mit vier Bit dargestellt wird. Dies ist in der Praxis ein üblicher Wert. Die Zahlen in den in Fig. 2 dargestellten Feldern stellen jedoch nicht die Schwellwerte selbst dar, sondern bilden lediglich eine Numerierung der Bildpunkte innerhalb jedes Feldes, weil dies für die folgende Erläuterung übersichtlicher ist.

In Fig. 2 sind die Felder derart gegenseitig angeordnet, daß beispielsweise das Feld 29 mit der linken oberen Ecke in den fehlenden Teil des Feldes 26 hineinragt. Dadurch ist dann das Feld 27 gegenüber dem Feld 26 um eine Zeile nach oben verschoben, und das Feld 28 ist um eine Spalte nach links gegenüber dem Feld 26 verschoben. Entsprechendes gilt auch für alle anderen Felder.

In Fig. 2 sind in dem Kasten 24 die aufeinanderfolgenden Nummern der Bildzeilen angegeben. Ferner ist die erste Zeile des Bildes über vier Felder durch einen Kasten 25 hervorgehoben. Daraus ist zu erkennen, daß in dieser Zeile alle Bildpunktpositionen des Feldes vorkommen, d.h. alle Schwellwerte des Satzes von Schwellwerten sind in dem Kasten 25 berücksichtigt. Außerdem ist zu erkennen, daß in diesem Beispiel die zeilenweise aufeinanderfolgenden Schwellwerte nebeneinander in dem Kasten 25 wirksam werden. Diese Folge von Schwellwerten wiederholt sich dann zyklisch in der Bildzeile. Wenn nun zur Auflösungsumwandlung beispielsweise eine Zeile weggelassen wird, ist zu erkennen, daß in den beiden benachbarten Bildzeilen weiterhin alle Schwellwerte berücksichtigt sind, so daß das Weglassen von Bildzeilen den gesamten optischen Eindruck praktisch nicht verändert, abgesehen von dem Verlust eventueller Details, der bei Auflösungsverringerung unvermeidbar ist. Wenn zur Auflösungserhöhung eine Zeile verdoppelt wird, sind in der verdoppelten Zeile ebenfalls alle Schwellwerte gleichmäßig berücksichtigt. Dies gilt in gleicher Weise auch für die Spaltenrichtung. Auf diese Weise kann die Auflösung des Bildes durch Bildzeilenauslassung oder -hinzufügung leicht verändert werden.

Für die Erzeugung des Pseudo-Halbtonbildes, das diese Eigenschaften hat, wird in dem beschriebenen Beispiel das Abtastsignal des ersten Bildpunktes mit dem ersten Schwellwert verglichen, der in einem Schwellwertspeicher beispielsweise an der Adresse Null gespeichert ist. Der nächste abgetastete Bildpunktwert wird mit dem Schwellwert an der Adresse 1 verglichen usw. Ein die Schwellwerte enthaltender Schwellwertspeicher wird also nacheinander an allen Speicherstellen zyklisch aufeinanderfolgend adressiert. Mit der nächsten Bildzeile, d.h. der Bild zeile 1, wird diese Folge wiederholt, wie aus Fig. 2 zu erkennen ist, jedoch beginnend mit der Adresse 4. Entsprechend beginnt die Zeile 2 mit der Adresse 8, usw. Der Schwellwertspeicher muß also so adressiert werden, daß die einzelnen Adressen zyklisch wiederholt nacheinander aufgerufen werden, jedoch bei jeder neuen Bildzeile beginnend mit einer anderen Anfangsadresse.

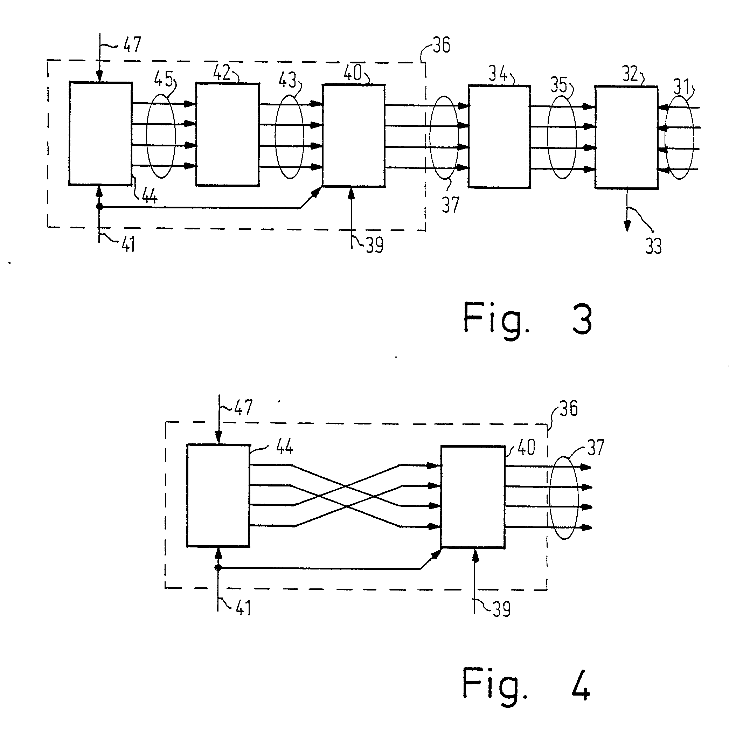

Eine Anordnung zur Durchführung einer derartigen Adressenfolge ist als Blockschaltbild in Fig. 3 dargestellt. Diese enthält einen binären Vergleicher 32, dem das digitalisierte Abtastsignal über die Eingänge 31 und der Schwellwert über die Eingänge 35 zugeführt Wird. Wenn das Abtastsignal größer ist als der Schwellwert, wird am Ausgang 33 des Vergleichers ein Signal entsprechend einem schwarzen Punkt des binären Pseudo-Halbtonbildes erzeugt, wobei vorausgesetzt ist, daß ein Abtastsignal mit großem Wert einem dunklen abgetasteten Punkt entspricht. Die dem Vergleicher 32 über die Verbindung 35 zugeführten Schwellwerte werden als digitale Werte aus einem Schwellwertspeicher 34 ausgelesen, der von einer Adressiervorrichtung 36 über die Verbindung 37 adressiert wird.

Die Adressiervorrichtung 36 enthält einen Zähler 40, der über den Eingang 39 ein mit den Bildelementen synchrones Zähltaktsignal empfängt. Die Verbindung 37 zur Adressierung des Schwellwertspeichers 34 umfaßt die Ausgänge der Zählstufen des Zählers 40. Dadurch werden zyklisch nacheinander alle Adressen des Schwellwertspeichers 34 angesteuert und die zugehörigen Schwellwerte über die Verbindung 35 ausgegeben.

Damit der Zähler 40 am Beginn jeder neuen Bildzeile mit der richtigen Adresse auf der Verbindung 37 beginnt, wird er durch ein zu Beginn jeder neuen Bildzeile auf der Leitung 41 auftretendes Zeilentaktsignal mit der richtigen Anfangsadresse geladen, die über die Verbindung 43 von einem Anfangsadressenspeicher 42 geliefert wird. Dieser wird über die Verbindung 45 von einem Zeilenzähler 44 adressiert, der ebenfalls das Zeilentaktsignal auf der Leitung 41 erhält, jedoch am Zähleingang, so daß er mit jeder neuen Bildzeile um eine Stellung weiterzählt und damit aus dem Anfangsadressenspeicher 42 die entsprechende Anfangsadresse ausliest. Damit bei der ersten Zeile mit einer bestimmten Anfangsadresse begonnen wird, kann der Zähler 44 über ein Signal auf der Leitung 47, das bei Beginn einer Erzeugung eines Pseudo-Halbtonbildes erscheint, auf einen definierten Anfangswert zurückgesetzt werden. Dies ist jedoch nicht unbedingt erforderlich.

Die Anordnung nach Fig. 3 ist nicht nur für die in Fig. 2 dargestellten Verhältnisse bzw. Felder verwendbar, sondern für beliebige Formen und Größen von Feldern, wobei dann lediglich die Zyklusdauer des Zählers 40 sowie die Inhalte der Speicher 34 und 42 und gegebenenfalls die Größe des Vergleichers 32 angepaßt werden muß.

Die Anordnung nach Fig. 3 kann jedoch vereinfacht werden, wenn man von den in Fig. 2 dargestellten Feldern bzw. allgemein von Feldern ausgeht, die aus Quadraten mit einer Kantenlänge entsprechend einer ganzen Potenz von zwei hervorgegangen sind, wobei lediglich ein Element in einer Ecke weggelassen ist. Wie aus der Folge der Anfangsadressen in den einzelnen Bildzeilen in Fig. 2 zu erkennen ist, ist diese Anfangsadresse gegenüber derjenigen in der vorhergehenden Bildzeile um den Wert vier, d.h. um die Kantenlänge des Feldes versetzt. Wenn der Zeilenzähler 44 daher vor jeder neuen Bildzeile drei zusätzliche Zähltakte erhält, gibt er unmittelbar die neue Anfangsadresse für den Zähler 40 an, so daß der Anfangsadressenspeicher 42 eingespart werden kann. Der Versatz um jeweils vier Einheiten kann jedoch auch dadurch erreicht werden, daß der Ausgang der ersten Zählstufe des Zeilenzählers 44 mit dem Setzeingang für die dritte Stufe des Zählers 40 verbunden wird, da eine Verschiebung von Dualzahlen um zwei Stellen bekanntlich einer Multiplikation mit vier entspricht. Da es sich im vorliegenden Fall jedoch nicht um eine Multiplikation im strengen Sinne handelt, sondern um einen Versatz um jeweils vier Stellen, werden die anderen Ausgänge des Zeilenzählers 44 nicht alle gleichmäßig verschoben mit Eingängen des Zählers 40 verbunden, sondern in der Form, wie dies in Fig. 4 dargestellt ist. Dabei ist also der Ausgang der am nächsten am Takteingang liegenden ersten Stufe des Zeilenzählers 44 mit dem Ladeeingang für die dritte Stufe des Zählers 40 verbunden, der Ausgang der zweiten Stufe des Zeilenzählers 44 mit dem Ladeeingang für die vierte Stufe des Zählers 40, der dritte Ausgang des Zeilenzählers 44 mit dem Ladeeingang für die erste Stufe des Zählers 40 und der Ausgang der vierten Stufe des Zeilenzählers 44 mit dem Ladeeingang für die zweite Stufe des Zählers 40. Dabei müssen selbstverständlich beide Zähler 40 und 44 die gleiche Zykluslänge aufweisen, nämlich einen Zählzyklus von fünfzehn Stellungen (0 bis 14), wie aus Fig. 2 zu erkennen ist. Dadurch liefert dann die Adressiereinrichtung 36 alle Adressen für den Schwellwertspeicher 34 in der richtigen Folge.

Eine weitere Vereinfachung der Anordnung nach Fig. 3 ist möglich, wenn die Anzahl der Bildpunkte auf einer Zeile ein ganzzahliges Vielfaches eines Zyklus entsprechend dem Block 25 in Fig. 2 plus die Kantenlänge eines Feldes ist. Dabei kann nämlich der Zähler 40 in Fig. 3 kontinuierlich weiterzählen, da er dann zu Beginn jeder neuen Bildzeile gerade die richtige Anfangsadresse erreicht, wie beispielsweise aus Fig. 2 zu erkennen ist, wenn die Bild zeile nach dem Block 30 beendet ist. In diesem Falle sind bei der Anordnung nach Fig. 3 nicht nur der Anfangsadressenspeicher 42, sondern auch der Zeilenzähler 44 unnötig. Diese Vereinfachung ist im übrigen auch bei anderen Zeilenlängen, d.h. Anzahlen von Bildpunkten je Zeile, möglich, wenn nach dem Ende einer Bildzeile und dem Beginn der neuen Zeile dem Zähler 40 eine entsprechende Anzahl von zusätzlichen Taktsignalen zugeführt werden können, um diese Bedingung zu erfüllen.

## Ansprüche

1. Verfahren zum Erzeugen eines Pseudo-Halbtonbildes aus Bildpunkten, deren binäre Bildpunktwerte gemäß dem Ordered Dither-Verfahren aus der Abtastung einer Vorlage und Vergleich des Abtastsignals der Bildpunkte in jeweils einem Feld aus einer vorgegebenen Anzahl in einer bestimmten Lage zueinander benachbarter Bildpunkte mit einem Satz von zumindest teilweise verschiedenen Schwellwerten gewonnen sind, wobei jedem Bildpunkt des Feldes ein eigener Schwellwert aus dem Satz von Schwellwerten zugeordnet ist und benachbarte Felder ohne Lücke aneinander grenzen, dadurch gekennzeichnet, daß die Felder aus Bildpunkten des abgetasteten Bildes in Bildzeilen-und Bildspaltenrichtung gegeneinander derart versetzt sind, daß in jeder Bildzeile und Bildspalte im wesentlichen die gleiche Anzahl der verschiedenen Zeilen und Spalten der Felder vorhanden ist.

2. Verfahren nach Anspruch 1, dadurch gekennzeichnet, daß benachbarte Felder um jeweils eine Zeile bzw. eine Spalte gegeneinander verschoben sind.

3. Anordnung zur Durchführung des Verfahrens nach Anspruch 1 oder 2, mit einem Vergleicher, dem die Abtastsignale der aufeinanderfolgenden Bildpunkte und die Schwellwertsignale zugeführt werden, die in einem von einer Adressiervorrichtung adressierten Schwellwertspeicher gespeichert sind, wobei der Vergleicher ein binäres Ausgangssignal mit dem einen Wert liefert, wenn der Wert des Abtastsignals größer ist als der gleichzeitig zugeführte Schwellwert, dadurch gekennzeichnet, daß die Adressiervorrichtung (36) einen Zähler - (40) enthält, der einen mit dem Zuführen der Abtastsignale synchronen Zähltakt erhält und der nacheinander alle Schwellwerte in dem Schwellwertspeicher (34) adressiert und ausliest und der zu Beginn jeder neuen Bildzeile den Schwellwertspeicher (34) an einer neuen Adresse adressiert.

4. Anordnung nach Anspruch 3, dadurch gekennzeichnet, daß ein mit jeder neuen Zeile auftretender Zeilentakt den Zähler (40) auf eine Anfangsadresse setzt, die aus einem Anfangsadressenspeicher (42) ausgelesen wird, der von einem mit dem Zeilentakt weitergeschalteten Zeilenzähler (44) adressiert ist.

5. Anordnung nach Anspruch 4, dadurch gekennzeichnet, daß der Anfangsadressenspeicher der Zeilenzähler (40) selbst ist, dessen Zählerausgänge (41) mit vertauschter Wertigkeit die jeweilige Anfangsadresse für den Zähler liefern.

## Fig. 1

Grid 20:

| 7 | 9 | 11 | 13 |
|---|---|----|----|
| 5 | 7 | 9  | 11 |
| 3 | 5 | 7  | 9  |
| 1 | 3 | 5  | 7  |

Grid 21:

| 8 | 6 | 7 | 12 |
|----|----|----|----|
| 5 | 0 | 1 | 9 |
| 4 | 3 | 2 | 14 |
| 11 | 10 | 13 | 15 |

22

## Fig. 2

24

| 0 |
|---|
| 1 |
| 2 |
| 3 |
| 4 |
| 5 |
| 6 |
| 7 |
| 8 |
| 9 |
| 10 |
| 11 |
| 12 |
| 13 |
| 14 |

25  27  30

| 0 | 1 | 2 | 3 | 4 | 5 | 6 | 7 | 8 | 9 | 10 | 11 | 12 | 13 | 14 | 0 | 1 | 2 | 3 |
| 4 | 5 | 6 | 7 | 8 | 9 | 10 | 11 | 12 | 13 | 14 | 0 | 1 | 2 | 3 | 4 | 5 | 6 | 7 |
| 8 | 9 | 10 | 11 | 12 | 13 | 14 | 0 | 1 | 2 | 3 | 4 | 5 | 6 | 7 | 8 | 9 | 10 | 11 |
| 12 | 13 | 14 | 0 | 1 | 2 | 3 | 4 | 5 | 6 | 7 | 8 | 9 | 10 | 11 | 12 | 13 | 14 |
| 1 | 2 | 3 | 4 | 5 | 6 | 7 | 8 | 9 | 10 | 11 | 12 | 13 | 14 |
| 5 | 6 | 7 | 8 | 9 | 10 | 11 | 12 | 13 | 14 |
| 9 | 10 | 11 | 12 | 13 | 14 |
| 13 | 14 | 0 |

26  29  28

| 2 | 3 |
| 6 | 7 |
| 10 | 11 |

| 14 |

| 3 |
| 7 |
| 11 |

| 0 | 1 | 2 | 3 |
| 4 | 5 |
| 8 |
| 12 |

Fig. 3

Fig. 4